# EUROPÄISCHE PATENTSCHRIFT

(11) **EP 1 454 853 B1**
(45) Veröffentlichungstag und Bekanntmachung des Hinweises auf die Patenterteilung: **12.10.2005**
(21) Anmeldenummer: 04090044.1
(22) Anmeldetag: 12.02.2004
(51) Int. Cl.: B65G 47/64, B65G 13/10, B65G 17/00

(54) **Fördersystem für Behälter, insbesondere eine Flughafen-Gepäckförderanlage**
Transport system for containers, in particular an airport baggage transport system
Système de transport de contenants, en particulier un système de transport de baggages d'un aéroport

(30) Priorität: 27.02.2003 DE 10308657; 04.04.2003 DE 10315475
(43) Veröffentlichungstag der Anmeldung: 08.09.2004
(73) Patentinhaber: SIEMENS AKTIENGESELLSCHAFT, 80333 München (DE)
(72) Erfinder: Brixius, Wolfgang, 91077 Neunkirchen A. Br (DE); Gräfer, Dominik, 44265 Dortmund-Wellinghofen (DE); Hoene, Albrecht, Dr., 93138 Lappersdorf (DE)

(56) Entgegenhaltungen:
- WO-A-99/59901
- DE-A- 2 150 984
- US-A- 4 770 589

## Beschreibung

Die Erfindung betrifft ein Fördersystem für Behälter, insbesondere eine Flughafen-Gepäckförderanlage, gemäß dem Oberbegriff des Anspruchs 1.

Aus der DE 199 21 131 A1 ist bereits eine Weiche für eine Förderanlage bekannt. Diese weist in Bewegungsrichtung der Behälter gesehen einen Eingangsbereich auf, an den sich ein Weichenbereich anschließt, in dem die Behälter in die gewünschte Richtung geleitet werden. An den Weichenbereich schließt sich ein Ausgangsbereich an, von dem aus sich die Behälter in eine der beiden auswählbaren Richtungen weiterbewegen. Die Bewegung der Behälter erfolgt in einer horizontalen Tragebene, die von Zylinderrollen gebildet ist.

Eine Richtungsänderung der Behälter im Weichenbereich erfolgt mittels einer Gruppe zusammenwirkender Module, die jeweils einen Rollkörper aufweisen, auf denen die Behälter beim Durchgang aufliegen. Dabei sind die Rollkörper der Module gemeinsam über ein Stellmittel um eine vertikale Achse schwenkbar gelagert.

Weiter sind Weichen mit schräg angestellten Rollen bekannt, welche je nach gewünschter Richtung angehoben werden können, um so die Behälter über einen Reibschluss in die entsprechende Richtung zu bewegen. Nachteilig ist dabei der relativ große Verschleiß und dass die korrekte Funktion der Weiche vom Schwerpunkt des Behälters einschließlich Fördergut abhängig ist.

Bekannt ist auch, die Behälter mittels mittig liegenden Führungsschienen, in denen am Behälter montierte Führungsrollen laufen, zwangsweise in die gewünschte Richtung geführt werden. Dabei entspricht die Richtung des Behälters nicht voll der Antriebsrichtung der Antriebsrollen, was mit einem erhöhten Verschleiß verbunden ist. Die jeweils punktuell in den Behälter eingeleitete Zwangsführung erfordert dabei Metalleinsätze im Behälter, was eine vollständige Durchleuchtbarkeit der Behälter in einer Röntgenanlage verhindert.

Durch die DE 2 150 984 A ist auch eine weiche für Behälter bekannt.

Die Aufgabe der Erfindung ist es, ein Führungssystem mit zumindest einer Weiche anzugeben, die eine nahezu reibungsfreie horizontale Führung der Behälter in jeder vorgesehenen Richtung sicherstellt und konstruktiv einfach aufgebaut ist.

Die Lösung dieser Aufgabe ist durch die im Anspruch 1 angegebenen Merkmale gegeben. Durch die kennzeichnenden Merkmale der Unteransprüche ist das Fördersystem in vorteilhafter Weise weiter ausgestaltet.

Die Lösung sieht vor, dass die Behälter im Eingangsbereich mit Hilfe von Ausrichtungs- und Vortriebsmitteln ausgerichtet und geführt vorgetrieben werden, dass die Behälter im Weichenbereich mittels eines Stellglieds eine Richtungsänderung erfahren und dass sich die Behälter im Ausgangsbereich vorgetrieben und geführt zu den jeder Richtung zugeordneten unmittelbar nachfolgenden Förderern bewegen, wobei jeder Richtung ein unter die Tragelementebene absenkbares Vortriebs- und Führungsmittel zugeordnet und jeweils nur das der gewünschten Richtung zugeordnete angehoben ist.

Weg- und Geschwindigkeitsunterschiede lassen sich ausgleichen, wenn die Ausrichtungs- und Vortriebsmittel als quer zur Tragelementebene verlaufende Elemente ausgebildet sind, die in eine auf der Behälterunterseite ausgebildete und in Behälterlängsrichtung verlaufende Ausnehmung eingreifen, wobei sie an den gegenüberliegenden Längsseiten anliegen und auf diese eine Anpresskraft und einen Vortrieb ausüben.

Wenn die Elemente zwei über Rollen geführte Antriebsbänder sind, die mit ihren nach außen weisenden Bandseiten an den Ausnehmungslängsseiten anliegen, wobei die Rollenachsen quer zur Tragelementebene verlaufen, sind geringe Abstände zwischen den treibenden Antriebsbändern möglich, woraus sich wiederum geringe Geschwindigkeitsdifferenzen ergeben.

In einer einfachen Ausführungsform sind die Ausnehmungslängsseiten parallel zueinander angeordnet.

Ein verschleißarmer, geräuscharmer Transport der Behälter ist möglich, wenn die Elemente Rollen sind, die an den Ausnehmungslängsseiten abrollen.

Die Führung verbessert sich, wenn die Ausnehmungslängsseiten voneinander weg schräg nach außen verlaufen.

Die Genauigkeit der Führung lässt sich weiter verbessern, wenn die Ausnehmungslängsseiten eine jeweils zu ihrer Mitte hin zunehmende nach außen gerichtete Wölbung aufweisen.

Eine querkraftarme Führung wird erzielt, wenn die Behälter sich über gelagerte Kugelrollen oder Gleitflächen auf den Tragelementen abstützen.

Konstruktiv einfach ist es, wenn das passive Stellglied als Quer zur Tragelementebene angeordnete Blattfeder mit auf beiden Flachseiten parallel zueinander angeordneten freidrehbaren Führungsrollen ausgebildet ist, die auf ihrer dem Eingangsbereich zugewandten Seite fest angeordnet und auf ihrer anderen Seite durch Biegung auslenkbar ist.

Das von der Blattfeder übertragbare Moment erhöht sich, wenn dieses mittels einer Kurbelschwinge auslenkbar und mittels eines Vier-Gelenk-Getriebes in einen Kurvenradius geführt ist.

Zweckmäßiger Weise sind die Vortriebs- und Führungsmittel als quer zur Tragelementebene verlaufende Rollen und/oder zumindest ein Antriebsband ausgebildet sind, welche in die Ausnehmung eingreifen, wobei sie an den gegenüberliegenden Längsseiten anliegen und den Vortrieb bewirken.

Das Anheben und Absenken der Vortriebs- und Führungsmittel ist konstruktiv einfach ausführbar, wenn die Vortriebs- und Führungsmittel einen Stellmotor umfassen, dessen Motorachse Kurvenscheiben trägt, die Hubelemente betätigen, welche die Vortriebs- und Führungsmittel anheben und absenken.

Die Erfindung wird nachfolgend anhand einer Zeichnung näher beschrieben. Es zeigen:
- Fig. 1: eine Weiche für ein Fördersystem,
- Fig. 2: den Eingangsbereich der Weiche gemäß Fig. 1,
- Fig. 3, 4: den Weichenbereich der Weiche gemäß Fig. 1,
- Fig. 5, 6: den Ausgangsbereich der Weiche gemäß Fig. 1,
- Fig. 7: eine alternative Ausführung des Weichenbereichs gemäß Fig. 3 in einer schematischen Darstellung,
- Fig. 8: den Weichenbereich gemäß Fig. 5 aus einer anderen Blickrichtung,
- Fig. 9: eine alternative Ausführung der Vortriebs- und Führungsmittel des Ausgangsbereichs gemäß Fig. 1 und
- Fig. 10: die Vortriebs- und Führungsmittel gemäß Fig. 7 mit aufliegendem Behälter.

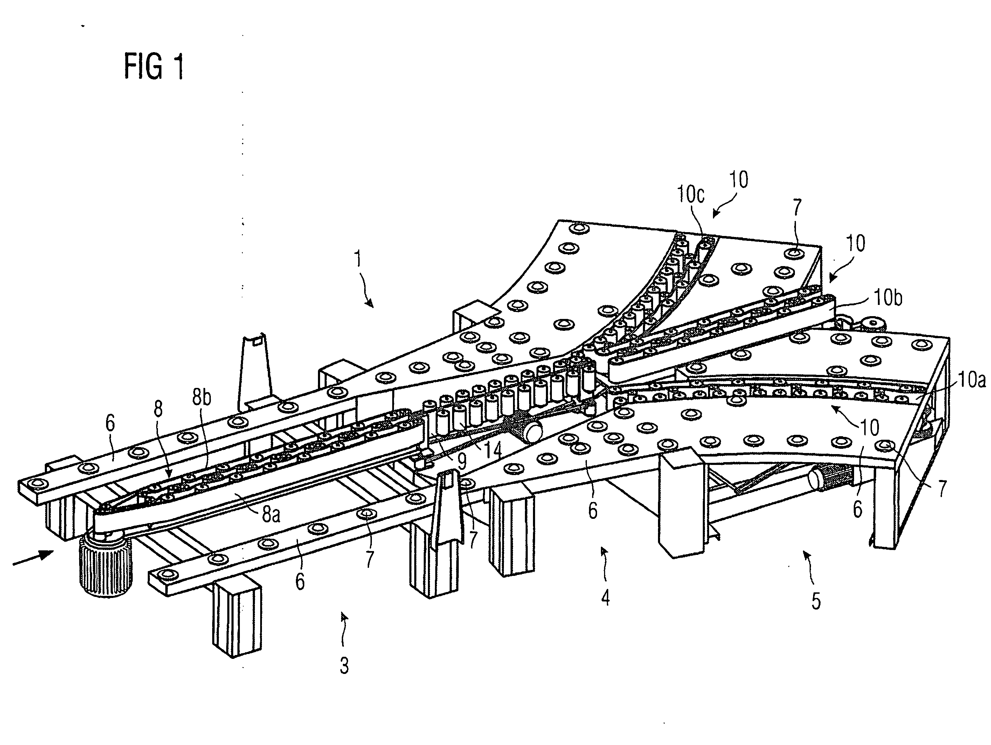

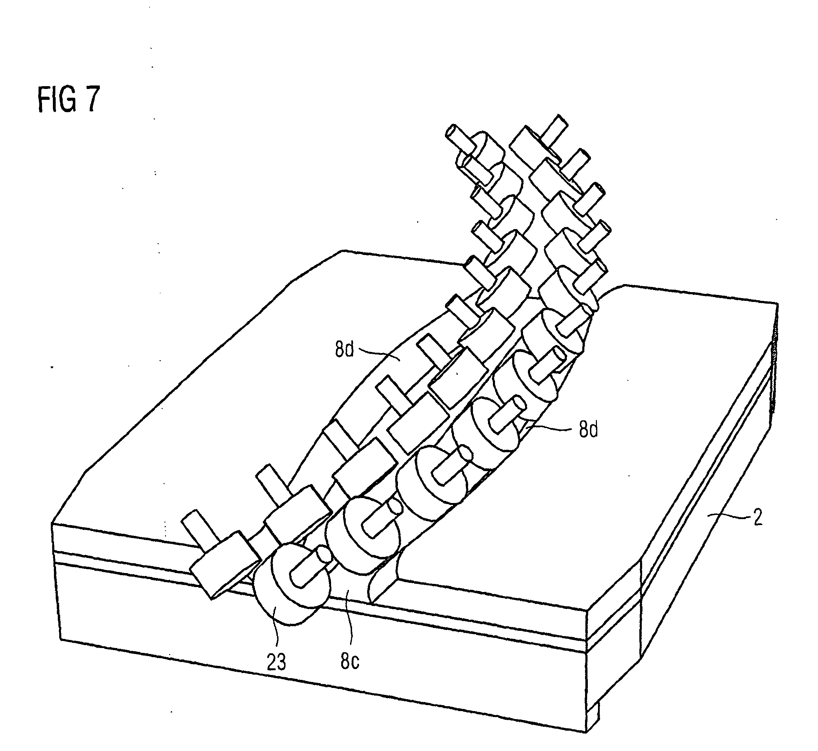

Fig. 1 zeigt eine Weiche 1 eines Fördersystems für Behälter 2 (s. Fig. 7, 8, 10), die insbesondere in einer Flughafen-Gepäckförderanlage einsetzbar ist. Die Behälter 2 durchlaufen die Weiche 1 in Pfeilrichtung, wobei sie zunächst vom Eingangsbereich 3 übernommen werden, an den sich ein Weichenbereich 4 unmittelbar anschließt. Je nach Weichenstellung bewegen sich die Behälter 2 in einem daran anschließenden Ausgangsbereich 5 ohne Richtungsänderung weiter, oder bezogen auf Fig. 1 - nach links oder rechts. Dabei stützen sich die Behälter 2 auf plattenförmigen Tragelementen 6 über frei drehbare Kugelrollen 7 ab. Alternativ können selbstverständlich auch Gleitflächen und dergleichen verwendet werden.

Im Eingangsbereich 3 werden die Behälter 2 mit Hilfe von Ausrichtungs- und Vortriebsmitteln 8 in Form von zwei Antriebsbändern 8a, 8b ausgerichtet und geführt vorgetrieben. Die Behälter 2 weisen dazu an ihrer Unterseite eine nutförmige Ausnehmung 8c mit zwei gegenüberliegenden Längsseiten 8d (s. Fig. 7, 8, 10) auf, in welche die Antriebsbändern 8a, 8b beim Behältertransport eingreifen.

Im Weichenbereich 4 werden die Behälter 2 dann mittels eines Stellglieds 9 zur entsprechenden Richtung hingeführt. Das Stellglied 9 ist als Blattfeder ausgebildet, die an ihrem in Fig. 1 linken Ende fest angeordnet und deren gegenüberliegendes Ende (rechtes Seite in Fig. 1) durch Biegung nach rechts oder links bewegbar ist.

Jeder Richtung zugeordnet ist im Ausgangsbereich 5 ein absenkbares Vortriebs- und Führungsmittel 10 in Form eines Antriebsbands 10a, 10b, 10c vorgesehen. In Fig. 1 sind die beiden Antriebsbänder 10a, 10c abgesenkt dargestellt, während das Antriebsband 10b nach oben über die Tragelementebene der Tragelemente 6 hinausragt.

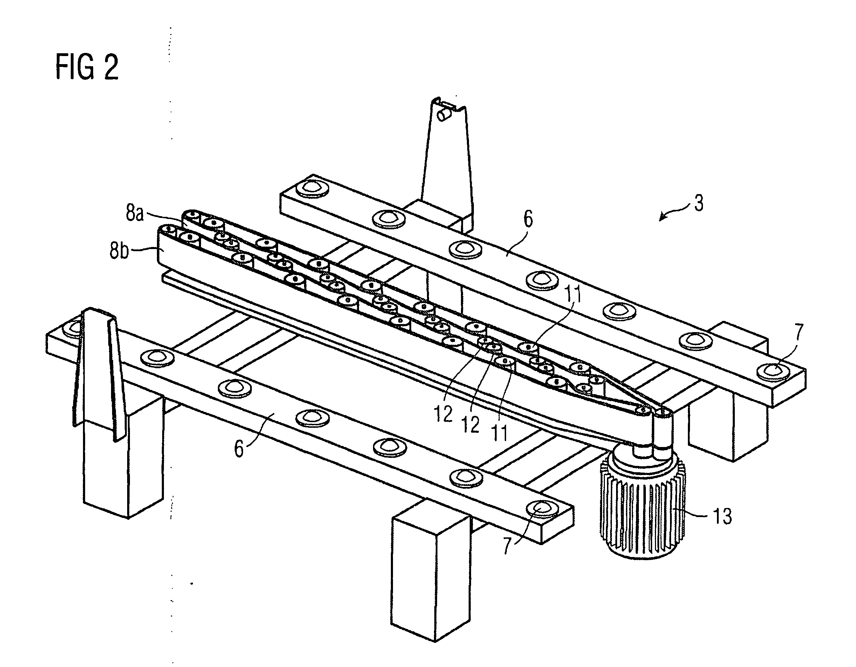

Fig. 2 zeigt den Eingangsbereich 3 der Weiche aus einer anderen Blickrichtung. Die beiden Antriebsbänder 8a, 8b verlaufen senkrecht zur Ebene der Tragelemente 6 und ragen über diese hinaus. Die Antriebsbänder 8a, 8b sind über Zylinderrollen 11, 12 geführt; die Drehachsen der Rollen 11, 12 verlaufen ebenfalls senkrecht zur Tragelementebene. Die Rollen 12 sind zusätzlich um eine versetzte Achse verschwenkbar gelagert, die parallel zu den Drehachsen der Rollen 11, 12 verläuft, so dass sie durch die Bandführung und das Antriebsmoment des Motors (s. Antriebsritzel 13 in Fig. 2) nach außen gedrückt werden. Die beiden beim Antreiben eines Behälters 2 in dessen Längsnut 8c eingreifenden Antriebsbänder 8a, 8b liegen jeweils an den Ausnehmungslängsseiten 8d an, die parallel zueinander angeordnet sind. Durch die schwenkbare Lagerung der Rollen 11, 12 werden die nach außen weisenden Bandseiten an die Ausnehmungslängsseiten 8d der Behälterlängsnut 8c gepresst. Auf diese Weise werden eventuelle Tolleranzen der Behältern 2 spielfrei ausgeglichen.

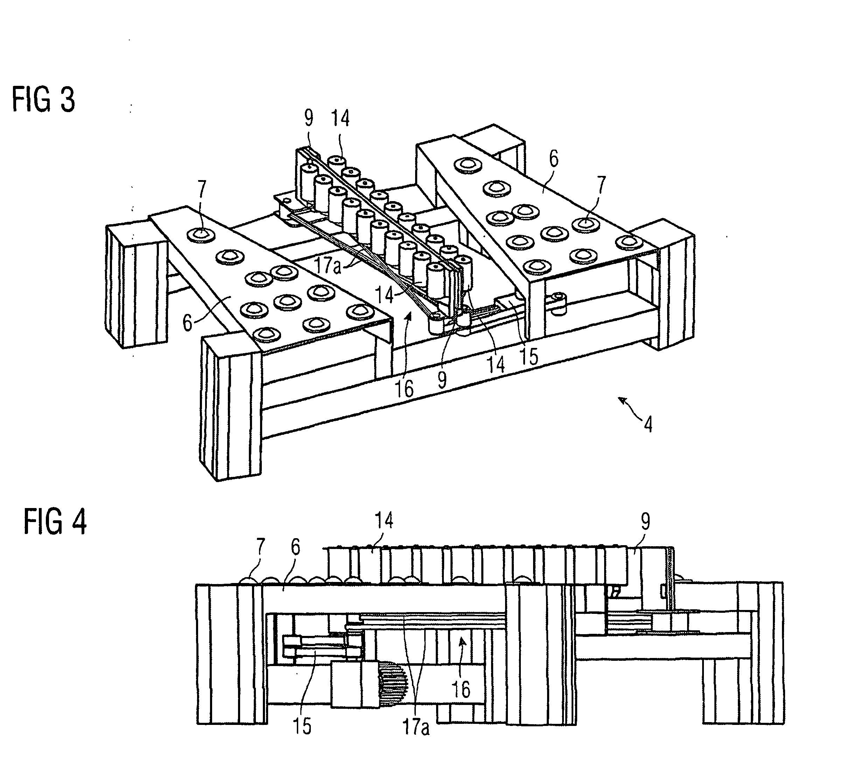

Fig. 3 zeigt den Weichenbereich 4 in einer vergrößerten Darstellung aus einer Blickrichtung von schräg oben und Fig. 4 eine zugehörige Ansicht von vorn gesehen. Wie Fig. 3 zeigt, ist die Blattfeder 9 ebenfalls senkrecht zur Tragelementebene angeordnet, wobei auf beiden Flachseiten frei drehbare Führungsrollen 14 nach Art einer Rollenbahn ausgebildet sind. Zum Verbiegen der Blattfeder 9 dient eine Kurbelschwinge 15, die mit einem Vier-Gelenk-Getriebe 16 mit zwei Gelenkstangen 17a zusammenwirkt. Ausgelenkt wird der in Bewegungsrichtung der Behälter 2 gesehen vordere Teil der Blattfeder 9.

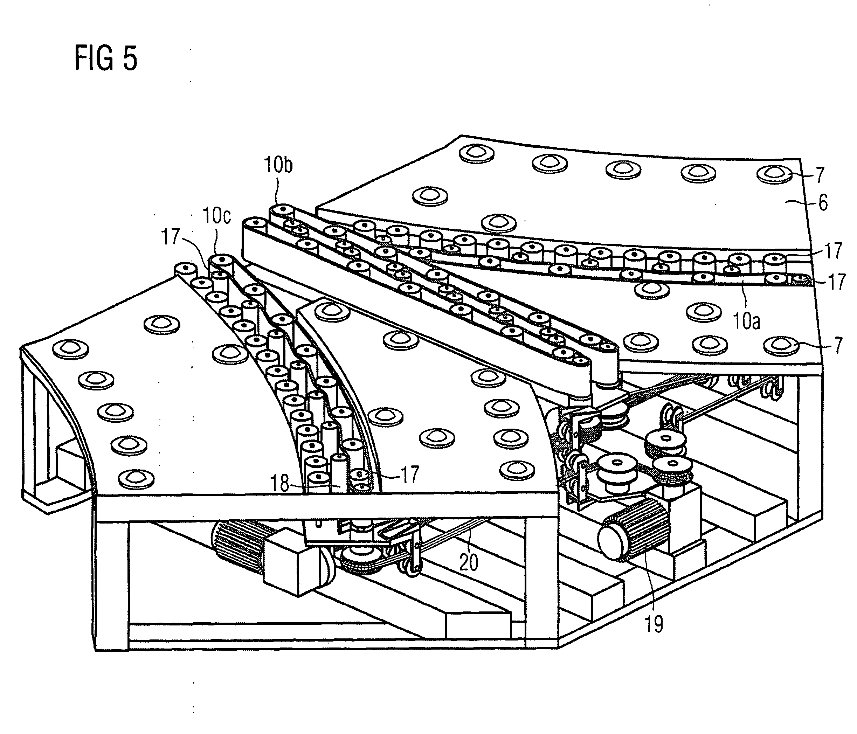

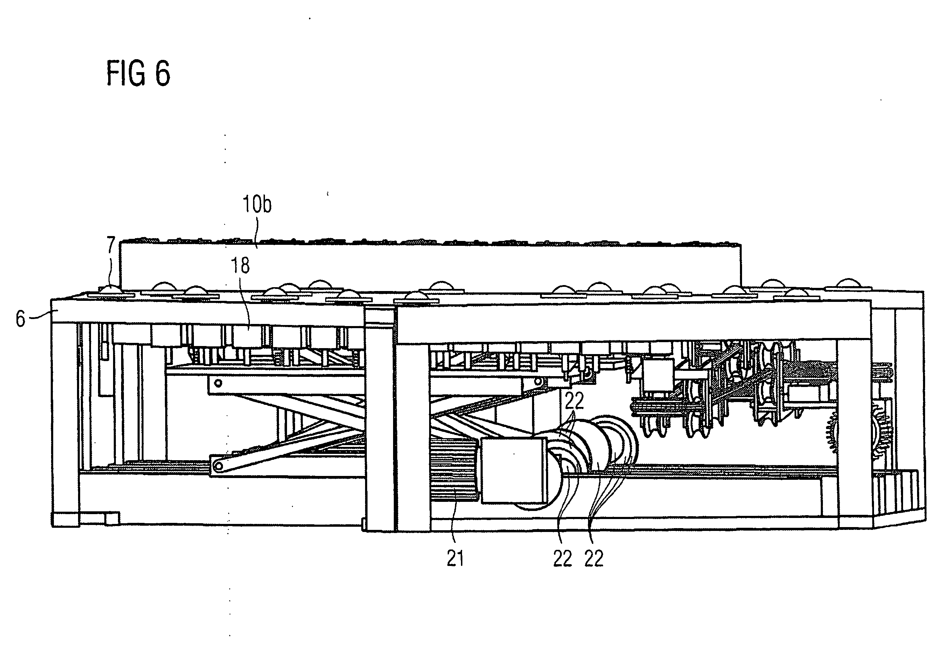

Weiter ist in Fig. 5 der Ausgangsbereich 5 von schräg oben gesehen dargestellt; Fig. 6 zeigt die dazugehörige Ansicht von vorn gesehen. Wie man Fig. 5 entnehmen kann, ist das Vortriebs- und Führungsmittel 10, das keine Richtungsänderung bewirkt und die Behälter 2 weiter geradeaus vortreibt, analog zu dem Ausrichtungs- und Vortriebsmittel 8 aus zwei parallelen Antriebsbändern 10b gebildet. Auch hier werden beim Behältertransport die nach außen weisenden Bandseiten gegen die Ausnehmungslängsseiten 8d der Behälter 2 gedrückt. Die beiden umlaufenden Antriebsbänder 10b sorgen für den nötigen Vortrieb der Behälter 2. Im Unterschied zu den Antriebsbändern 8a, 8b sind die Bänder 10b unter die Tragelementebene absenkbar. Etwas anders sind die Vortriebs- und Führungsmittel 10 mit den Antriebsbändern 10a, 10c ausgestaltet. Sie weisen nur ein einziges kurvenförmig verlaufendes Antriebsband 10a, 10c auf, das von Zylinderrollen 17 angetrieben und geführt ist. Parallel zu den Antriebsbändern 10c und 10b sind nach Art einer Rollbahn Führungsrollen 18 vorgesehen. In ihrer angehobenen Stellung greifen die Vortriebs- und Führungsmittel 10 ebenfalls in die Längsnut 8c der Behälter 2 ein und führen diese in die zugeordnete Richtung. Der Vortrieb erfolgt über einen Antriebsmotor, dessen Ritzel 19 in Fig. 5 gezeigt ist. Die Übertragung des Drehmoments erfolgt dabei mittels eines Riemens 20. Fig. 6 zeigt weiter, dass zusätzlich ein Stellmotor (Ritzel 21) vorgesehen ist, der auf seiner Motorachse Kurvenscheiben 22 trägt, um die Hubelemente (nicht gezeigt) zu betätigen, welche die Vortriebs- und Führungsmittel 10 wahlweise anheben und absenken, und zwar so, dass jeweils zwei der Mittel 10 abgesenkt und eines angehoben ist.

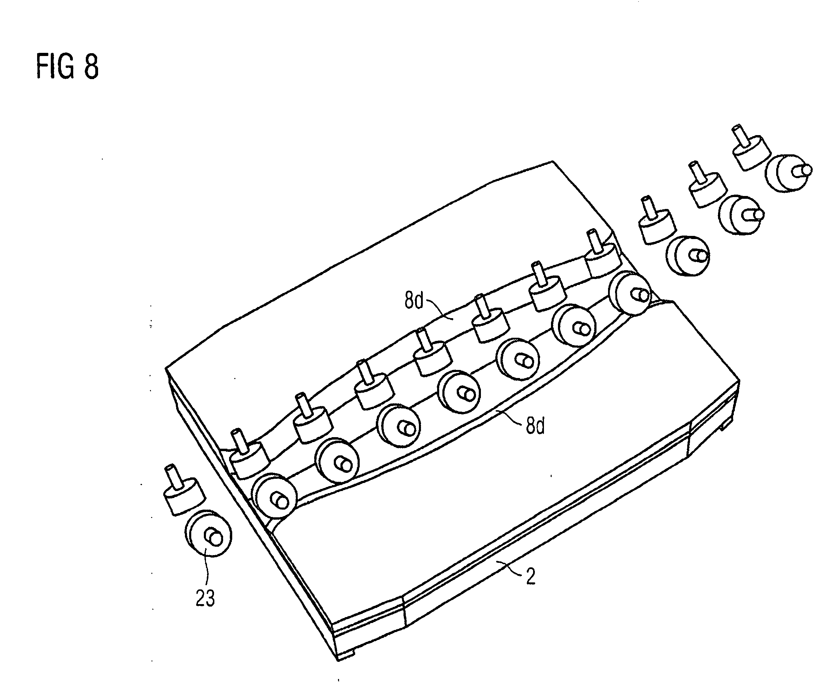

Fig. 7 und Fig. 8 zeigen eine alternative Ausführung zu den Antriebsbändern 8a, 8b und 10b, 10b. Diese sind hier durch leicht kegelförmige Rollen 23 ersetzt, welche parallel hintereinander angeordnet sind und an den Ausnehmungslängsseiten 8d der Längsnut 8c abrollen. Dabei verlaufen die Ausnehmungslängsseiten 8d zweckmäßigerweise voneinander weg schräg nach außen, wobei sie eine jeweils zu ihrer Mitte hin zunehmende nach außen gerichtete Wölbung aufweisen. Fig. 7 zeigt die Verwendung der Rollen 23 in einem kurvenförmig gebogenen und Fig. 8 in einem geraden Bereich.

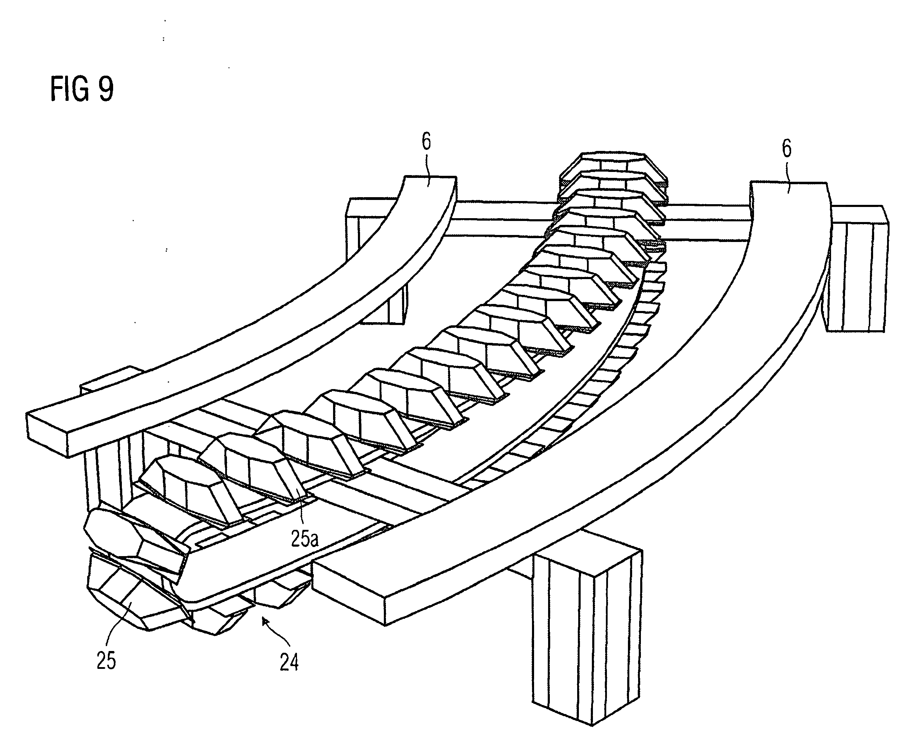

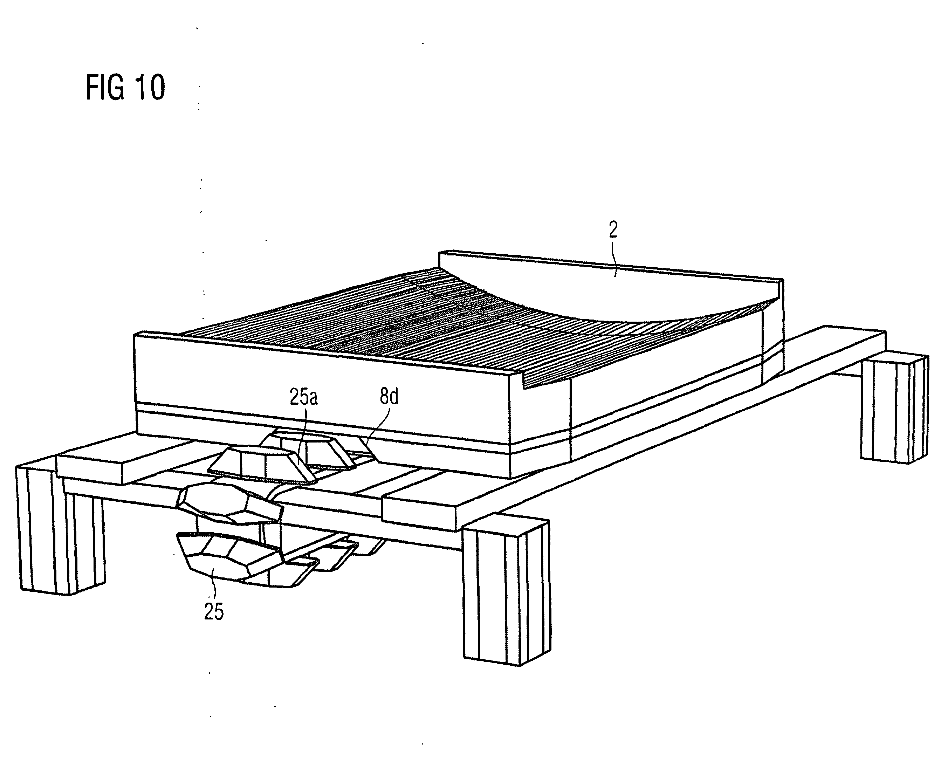

Eine weiter Alternative ist in Fig. 9 und Fig. 10 dargestellt, die eine Scharnierbandkette 24 mit parallel zueinander angeordneten Prismen 25 (oder Trapezen) zeigt. Die Prismen 25 greifen wie in Fig. 10 dargestellt in die Längsnut 8c ein, wobei sie den Behälter 2 unter Bildung eines Reibschlusses mit den schrägen Ausnehmungslängsseiten 8d führen und vortreiben, die dabei mit ihren nach außen weisenden Prismenseiten 25a an den Ausnehmungslängsseiten 8d anliegen.

### Bezugszeichenliste:

- 1: Weiche
- 2: Behälter
- 3: Eingangsbereich
- 4: Weichenbereich
- 5: Ausgangsbereich
- 6: Tragelement
- 7: Kugelrolle
- 8: Ausrichtungs- und Vortriebsmittel
- 8a: Antriebsband
- 8b: Antriebsband
- 8c: Längsnut
- 8d: Ausnehmungslängsseite
- 9: Stellglied
- 10: Vortriebs- und Führungsmittel
- 10a: Antriebsband
- 10b: Antriebsband
- 10c: Antriebsband
- 11: Zylinderrolle
- 12: Zylinderrolle
- 13: Antriebsritzel
- 14: Führungsrolle
- 15: Kurbelschwinge
- 16: Vier-Gelenk-Getriebe
- 17: Zylinderrolle
- 17a: Gelenkstange
- 18: Führungsrolle
- 19: Ritzel
- 20: Riemen
- 21: Ritzel
- 22: Kurvenscheibe
- 23: Rolle
- 24: Antriebsband
- 25: Prisma
- 25a: Prismenseite

## Patentansprüche

1. Fördersystem für Behälter (2), insbesondere eine Flughafen-Gepäckförderanlage,
mit zumindest einer Weiche (1), die in Bewegungsrichtung der Behälter (2) einen Eingangsbereich (3), einen sich anschließendem Weichenbereich (4) und einen Ausgangsbereich (5) aufweisen,
wobei die Behälter (2) auf Tragelementen (6), die in einer gemeinsamen Ebene liegen, aufliegen und sich je nach Weichenstellung vom Ausgangsbereich (5) aus in mindestens zwei verschiedene Richtungen bewegen,
wobei
die Behälter (2) im Eingangsbereich (3) mit Hilfe von Ausrichtungs- und Vortriebsmitteln (8) ausgerichtet und geführt vorgetrieben werden, wobei
die Behälter (2) im Weichenbereich (4) mittels eines Stellglieds (9) eine Richtungsänderung erfahren und wobei
sich die Behälter (2) im Ausgangsbereich (5) vorgetrieben und geführt zu den jeder Richtung zugeordneten unmittelbar nachfolgenden Förderern bewegen, **dadurch gekennzeichnet**
**dass** jeder Richtung ein unter die Tragelementebene absenkbares Vortriebs- und Führungsmittel (10) zugeordnet und
**dass** jeweils nur das der gewünschten Richtung zugeordnete angehoben ist.

2. Fördersystem nach Anspruch 1,
**dadurch gekennzeichnet,**
**dass** die Ausrichtungs- und Vortriebsmittel (8) als quer zur Tragelementebene verlaufende Elemente ausgebildet sind, die in eine auf der Behälterunterseite ausgebildete und in Behälterlängsrichtung verlaufende Ausnehmung eingreifen, wobei sie an den gegenüberliegenden Längsseiten (8d) anliegen und auf diese eine Anpresskraft und einen Vortrieb ausüben.

3. Fördersystem nach Anspruch 2,
**dadurch gekennzeichnet,**
**dass** die Elemente zwei über Rollen (11, 12) geführte Antriebsbänder (8a, 8b) sind, die mit ihren nach außen weisenden Bandseiten an den Ausnehmungslängsseiten (8d) anliegen, wobei die Rollenachsen quer zur Tragelementebene verlaufen.

4. Fördersystem nach Anspruch 3,
**dadurch gekennzeichnet,**
**dass** die Ausnehmungslängsseiten (8d) parallel zueinander angeordnet sind.

5. Fördersystem nach Anspruch 2,
**dadurch gekennzeichnet,**
**dass** die Elemente kegelförmige Rollen (23) sind, die an den Ausnehmungslängsseiten (8d) abrollen.

6. Fördersystem nach Anspruch 5,
**dadurch gekennzeichnet,**
**dass** die Ausnehmungslängsseiten (8d) voneinander weg schräg nach außen verlaufen.

7. Fördersystem nach Anspruch 4 oder 6,
**dadurch gekennzeichnet,**
**dass** die Ausnehmungslängsseiten (8d) eine jeweils zu ihrer Mitte hin zunehmende nach außen gerichtete Wölbung aufeisen.

8. Fördersystem nach einem der Ansprüche 1 bis 7,
**dadurch gekennzeichnet,**
**dass** die Behälter (2) sich über drehgelagerte Kugelrollen (7) oder Gleitflächen auf den Tragelementen (6) abstützen.

9. Fördersystem nach einem der Ansprüche 1 bis 8,
**dadurch gekennzeichnet,**
**dass** das Stellglied (9) als quer zur Tragelementebene angeordnete Blattfeder (9) mit auf beiden Flachseiten parallel zueinander angeordneten freidrehbaren Führungsrollen (14) ausgebildet ist, die auf ihrer dem Eingangsbereich (3) zugewandten Seite fest angeordnet und auf ihrer anderen Seite durch Biegung auslenkbar ist.

10. Fördersystem nach Anspruch 9,
**dadurch gekennzeichnet,**
**dass** die Blattfeder (9) mittels einer Kurbelschwinge (15) auslenkbar und mittels eines Vier-Gelenk-Getriebes (16) in einen Kurvenradius geführt ist.

11. Fördersystem nach einem der Ansprüche 1 bis 10,
**dadurch gekennzeichnet,**
**dass** die Vortriebs- und Führungsmittel (10) als quer zur Tragelementebene verlaufende Rollen (17, 18) und/oder zumindest ein Antriebsband (10a, 10b) ausgebildet sind, welche in eine auf der Behälterunterseite ausgebildete und in Behälterlängsrichtung verlaufende Ausnehmung eingreifen, wobei sie an den gegenüberliegenden Längsseiten (8d) der Ausnehmung anliegen und den Vortrieb bewirken.

12. Fördersystem nach Anspruch 1 oder 5,
**dadurch gekennzeichnet,**
**dass** die Vortriebs- und Führungsmittel (10) als quer zur Tragelementebene verlaufende Rollen (23) ausgebildet sind, welche in eine auf der Behälterunterseite ausgebildete und in Behälterlängsrichtung verlaufende Ausnehmung eingreifen, wobei sie an den gegenüberliegenden Längsseiten (8d) der Ausnehmung abrollend den Vortrieb bewirken.

13. Fördersystem nach einem der Ansprüche 1 bis 12,
**dadurch gekennzeichnet,**
**dass** die Vortriebs- und Führungsmittel (10) einen Stellmotor (21) umfassen, dessen Motorachse Kurvenscheiben (22) trägt, die Hubelemente betätigen, welche die Vortriebs- und Führungsmittel (10) anheben und absenken.

14. Fördersystem nach Anspruch 1,
**dadurch gekennzeichnet,**
**dass** die Ausrichtungs- und Vortriebsmittel (8) und/oder die Vortriebs- und Führungsmittel (10) als Scharnierbandkette (24) mit quer zur Kettenlaufrichtung parallel zueinander angeordneten Prismen (25) oder Trapezen ausgebildet ist,
wobei die Prismen (25) oder Trapeze in eine auf der Behälterunterseite ausgebildete und in Behälterlängsrichtung verlaufende Längsnut (8c) eingreifen, wobei sie den Behälter (2) jeweils unter Bildung eines Reibschlusses mit den schrägen Ausnehmungslängsseiten (8d) führen und vortreiben, die dabei mit ihren nach außen weisenden Prismenseiten (25a) an den Ausnehmungslängsseiten (8d) anliegen.

## Claims

1. Transport system for containers (2), in particular an airport baggage transport system, having at least one diverter
(1) which, in the direction of movement of the containers (2), has an input region (3), a following diverter region (4) and an output region (5), the containers (2) resting on loadbearing elements (6), which lie in a common plane and move in at least two different directions, starting from the output region (5), depending on the diverter position, the containers (2) in the input region (3) being aligned and driven forwards in a guided manner with the aid of alignment and forward drive means (8), the containers (2) in the diverter region (4) experiencing a change of direction by means of an actuating element (9) and the containers (2) in the output region (5) being driven forwards and moved in a guided manner towards immediately following conveyors assigned to each direction, **characterized in that** each direction is assigned a forward drive and guide means (10) that can be the lowered below the plane of the loadbearing elements, and **in that** in each case only that one assigned to the desired direction is raised.

2. Transport system according to Claim 1, **characterized in that** the alignment and forward drive means (8) are constructed as elements which run transversely with respect to the plane of the loadbearing element, which engage in a recess formed on the underside of the container and running in the container longitudinal direction and, bearing on the opposite long sides (8d), exert a pressing force and forward drive on the latter.

3. Transport system according to Claim 1, **characterized in that** the elements are two drive belts (8a, 8b) guided over rollers (11, 12), which bear with their outwardly pointing belt sides on the long sides (8d) of the recesses, the roller axes running transversely with respect to the plane of the loadbearing elements.

4. Transport system according to Claim 3, **characterized in that** the long sides (8d) of the recesses are arranged parallel to one another.

5. Transport system according to Claim 2, **characterized in that** the elements are conical rollers (23) which roll on the long sides (8d) of the recesses.

6. Transport system according to Claim 5, **characterized in that** the long sides (8d) of the recesses run obliquely outwards away from one another.

7. Transport system according to Claim 4 or 6, **characterized in that** the long sides (8d) each have an outwardly directed curvature which in each case increases towards their centre.

8. Transport system according to one of Claims 1 to 7, **characterized in that** the containers (2) are supported on the loadbearing elements (6) via rotationally mounted spherical rollers (7) or sliding surfaces.

9. Transport system according to one of Claims 1 to 8, **characterized in that** the actuating element (9) is constructed as a leaf spring (9) arranged transversely with respect to the plane of the loadbearing elements and having freely rotatable guide rollers (14) arranged parallel to one other on the two flat sides, which is arranged in a fixed manner on the side facing the input region (3) and can be deflected out by bending on its other side.

10. Transport system according to Claim 9, **characterized in that** the leaf spring (9) can be deflected out by means of a swinging crank (15) and is guided on a curved radius by means of a four-bar mechanism (16).

11. Transport system according to one of Claims 1 to 10, **characterized in that** the forward drive and guide means (10) are constructed as rollers (17, 18) which run transversely with respect to the plane of the loadbearing elements and/or at least one drive belt (10a, 10b), which engage in a recess formed on the underside of the container and running in the container longitudinal direction, bearing on the opposite long sides (8d) of the recess and effecting the forward drive.

12. Transport system according to Claim 1 or 5, **characterized in that** the forward drive and guide means (10) are constructed as rollers (23) which run transversely with respect to the plane of the loadbearing element and which engage in a recess formed on the underside of the container and running in the container longitudinal direction, bearing on the opposite long sides (8d) of the recess and effecting the forward drive.

13. Transport system according to one of Claims 1 to 12, **characterized in that** the forward drive and guide means (10) comprise an actuating motor (21) whose motor shaft bears cam discs (22) which actuate lifting elements which raise and lower the forward drive and guide means (10).

14. Transport system according to Claim 1, **characterized in that** the alignment and forward drive means (8) and/or the forward drive and guide means (10) is constructed as a hinged-belt chain (24) having prisms (25) or trapezoids arranged in a row parallel to one another and transversely with respect to the chain running direction, the prisms (25) or trapezoids engaging in a longitudinal groove (8c) formed on the underside of the container and running in the container longitudinal direction, guiding the containers (2) and driving them forwards while forming a frictional connection with the oblique long sides (8d) of the recesses, which bear on the long sides (8d) of the recesses with their outwardly pointing prism sides (25a).

## Revendications

1. Système de transport de contenants (2), notamment installation de transport de bagages dans un aéroport,
comprenant au moins un aiguillage (1) qui a, dans la direction de déplacement des contenants (2), une partie (3) d'entrée, une partie (4) d'aiguillage s'y raccordant et une partie (5) de sortie,
les contenants (2) reposant sur des éléments (6) supports qui sont dans un plan commun et se déplaçant, suivant la position de l'aiguillage, à partir de la partie (5) de sortie dans au moins deux directions différentes,
dans lequel les contenants sont avancés en étant orientés et guidés dans la partie (3) d'entrée à l'aide de moyens (8) d'orientation et d'avance, dans lequel
les contenants subissent dans la partie (4) d'aiguillage une modification de direction au moyen d'un actionneur (9) et dans lequel les contenants avancent dans la partie (5) de sortie et se déplacent en étant guidés vers les transporteurs venant directement ensuite associés à chaque direction,
**caractérisé en ce qu'**il est associé à chaque direction un moyen (10) d'avance et de guidage pouvant s'abaisser sous le plan des éléments supports et **en ce que**, respectivement, seul le moyen associé à la direction souhaitée est soulevé.

2. Système de transport suivant la revendication 1,
**caractérisé**
**en ce que** les moyens (8) d'orientation et d'avance sont constitués sous la forme d'éléments s'étendant transversalement au plan des éléments supports et pénétrant dans un évidement constitué dans la face inférieure des contenants et s'étendant dans la direction longitudinale des contenants en s'appliquant sur les grands côtés (8d) opposés et en leur appliquant une force de pression et une poussée vers l'avant.

3. Système de transport suivant la revendication 2,
**caractérisé en ce que** les éléments sont deux bandes (8a, 8b) d'entraînement guidées sur des galets (11, 12) et s'appliquant par leurs côtés tournés vers l'extérieur aux grands côtés (8d) de l'évidement, les axes des galets s'étendant transversalement au plan des éléments supports.

4. Système de transport suivant la revendication 3,
**caractérisé en ce que** les grands côtés (8d) des évidements sont parallèles.

5. Système de transport suivant la revendication 2,
**caractérisé en ce que** les éléments sont des galets 23 coniques qui roulent sur les grands côtés (8d) de l'évidement.

6. Système de transport suivant la revendication 5,
**caractérisé en ce que** les grands côtés (8d) de l'évidement s'éloignent l'un de l'autre en étant inclinés vers l'extérieur.

7. Système de transport suivant la revendication 4 ou 6,
**caractérisé en ce que** les grands côtés (8d) de l'évidement ont une courbure dirigée vers l'extérieur qui augmente vers leur milieu.

8. Système de transport suivant l'une des revendications 1 à 7,
**caractérisé en ce que** les contenants (2) s'appuient sur des galets (7) sphériques montés tournant ou sur des surfaces de glissement sur les éléments (6) supports.

9. Système de transport suivant l'une des revendications 1 à 8,
**caractérisé en ce que** l'élément (9) d'actionnement est constitué sous la forme de ressort (9) à lame disposé transversalement au plan des éléments supports et ayant des galets (14) de guidage fous disposés de façon parallèle entre eux sur deux côtés plats. Les galets (14) étant montés fixes sur leurs côtés tournés vers la partie (3) d'entrée et pouvant être déviés par flexion de l'autre côté.

10. Système de transport suivant la revendication 9,
**caractérisé en ce que** le ressort (9) à lame peut être dévié au moyen d'un mécanisme (15) à bielle et manivelle oscillant et peut être guidé suivant un rayon de courbure au moyen d'un quadrilatère articulé (16).

11. Système de transport suivant l'une des revendications 1 à 10,
**caractérisé en ce que** les moyens (10) d'avance et de guidage sont constitués sous la forme de galets (17, 18) s'étendant transversalement au plan des éléments supports et/ou au moins d'une bande (10a, 10b) d'entraînement qui pénètre dans un évidement constitué sur la face inférieure des contenants et s'étendant dans la direction longitudinale des contenants, en s'appliquant sur les grands côtés (8d) opposés de l'évidement et en provoquant l'avance.

12. Système de transport suivant la revendication 1 ou 5,
**caractérisé en ce que** les moyens (10) d'avance et de guidage sont constitués sous la forme de galets (23) s'étendant transversalement au plan des éléments supports qui pénètrent dans un évidement constitué sur la face inférieure des contenants et s'étendant dans la direction longitudinale des contenants, en roulant sur les grands côtés (8d) opposés de l'évidement et en provoquant l'avance.

13. Système de transport suivant l'une des revendications 1 à 12,
**caractérisé en ce que** les moyens (10) d'avance et de guidage comprennent un servomoteur (21), dont l'axe porte des disques (22) à came qui actionnent des éléments de course, lesquels soulèvent et abaissent les moyens (10) d'avance et de guidage.

14. Système de transport suivant la revendication 1,
**caractérisé en ce que** les moyens (8) d'orientation et d'avance et/ou les moyens (10) d'avance et de guidage sont constitués sous la forme de convoyeur (24) à charnière ayant des prismes (25) ou des trapèzes disposés parallèlement entre eux transversalement à la direction de passage du convoyeur, les prismes (25) ou les trapèzes pénétrant dans une rainure (8c) longitudinale constituée sur la face inférieure des contenants et s'étendant dans la direction longitudinale des contenants en guidant et en faisant avancer les contenants (2) par frottement avec les grands côtés (8d) inclinés de l'évidement en s'appliquant par leurs grands côtés (8d) de l'évidement, par leurs faces (25a) de prisme tournées vers l'extérieur.
